# EUROPEAN PATENT SPECIFICATION

(11) **EP 2 966 144 B1**
(45) Date of publication and mention of the grant of the patent: **25.10.2017**
(21) Application number: 14759691.0
(22) Date of filing: 28.02.2014
(51) Int. Cl.: C09K 9/02, C07D 311/92, C08F 290/06, C07F 7/21, G02F 1/00

(54) **PHOTOCHROMIC CURABLE COMPOSITION**
PHOTOCHROME HÄRTBARE ZUSAMMENSETZUNG
COMPOSITION PHOTOCHROMIQUE DURCISSABLE

(30) Priority: 04.03.2013 JP 2013041979
(43) Date of publication of application: 13.01.2016
(73) Proprietor: Tokuyama Corporation, Shunan-shi, Yamaguchi 745-0053 (JP)
(72) Inventor: IZUMI, Shinobu, Shunan-shi Yamaguchi 745-0053 (JP); MORI, Katsuhiro, Shunan-shi Yamaguchi 745-0053 (JP)
(74) Representative: Beckmann, Claus
(86) International application number: PCT/JP2014/055885
(87) International publication number: WO 2014/136919

(56) References cited:
- EP-A1- 1 568 739
- EP-A1- 1 674 460
- WO-A1-2010/110917
- WO-A1-2013/008825
- WO-A1-2013/008825
- JP-A- H0 656 948
- US-A1- 2003 036 579

## Description

### TECHNICAL FIELD

The present invention relates to a novel photochromic curable composition which can be advantageously used for the manufacture of a photochromic cured product having an excellent photochromic function and to a cured product obtained by curing the photochromic curable composition.

### BACKGROUND ART

Photochromism is the reversible function of a certain compound that it changes its color swiftly upon exposure to light including ultraviolet light such as sunlight or light from a mercury lamp and returns to its original color when it is put in the dark by stopping its exposure to light and applied for various uses. As photochromic compounds having this property, fulgimide compounds, spirooxazine compounds, chromene compounds, etc. were discovered. Since optical articles having photochromic properties can be obtained by mixing these compounds with plastics, a large number of studies have been made on the compounding of these compounds.

For example, even in the field of spectacle lenses, photochromism is applied. Photochromic spectacle lenses comprising a photochromic compound function as sunglasses whose lenses are quickly colored outdoors where they are irradiated with light including ultraviolet light such as sunlight and as ordinary transparent eyeglasses whose lenses are faded indoors where there is no irradiation, and demand for the photochromic eyeglasses is growing nowadays.

As for photochromic spectacle lenses, plastic lenses are particularly preferred from the viewpoints of lightweight and safety, and photochromic properties are generally provided to the plastic lenses by mixing the above photochromic compounds. As mixing methods, there are known a method in which the surface of a lens having no photochromic properties is impregnated with a photochromic compound (to be referred to as "impregnation method" hereinafter), a method in which a photochromic compound is dissolved in a monomer which is then polymerized to obtain a photochromic lens directly (to be referred to as "in-mass method" hereinafter), a method in which a coating layer having photochromic properties (to be referred to as "photochromic layer" hereinafter) is formed on the surface of a plastic lens having no photochromic properties (to be referred to as "coating method" hereinafter), and a method in which a monomer having photochromic properties is poured into a space between a plastic lens and a glass mold to be polymerized and cured (to be referred to as "lamination method" hereinafter). Various technologies are proposed for the impregnation method (refer to US Patent No. 5739243, US Patent No. 5973093 and WO95/10790), the in-mass method (refer to WO01/005854, WO04/083268 and WO09/075388 the coating method (refer to WO03/011967 WO05/01471 and WO13/008825 and the lamination method (refer to WO01/005854).

For the photochromic compounds and plastic optical articles comprising these compounds and having photochromic properties, the following properties are required from the viewpoint of the photochromic function: (I) the degree of coloration at a visible light range before ultraviolet light is applied (to be referred to as "initial coloration" hereinafter) should be low, (II) the degree of coloration upon exposure to ultraviolet light (to be referred to as "color optical density" hereinafter) should be high, (III) the speed from the stoppage of the application of ultraviolet light to the time when the compound returns to its original state (to be referred to as "fading speed" hereinafter) should be high, (IV) the repeat durability of this reversible function should be high, (V) storage stability should be high, (VI) the compound should be easily molded into an optical article, and (VII) the mechanical strength of an optical article should be high.

With these technologies as a background, there are proposed photochromic plastic lenses (optical materials) comprising a chromene compound which is hardly decomposed by light and rarely deteriorates in color development performance even when sunlight or light similar to sunlight is applied thereto continuously. The development of photochromic curable compositions comprising a combination of various polymerizable monomers and a photochromic compound (especially a chromene compound) in the in-mass method and the coating method is now under way.

For example, WO01/005854, WO04/083268 and WO09/075388 disclose photochromic curable compositions comprising specific (meth)acrylic polymerizable monomers having a (meth) acrylic group (general name for methacrylic group and acrylic group) and a chromene compound. Since the in-mass method has a feature that photochromic plastic lenses can be mass-produced at a low cost by using a glass mold, most of the photochromic plastic lenses are now manufactured by this method.

However, the photochromic curable compositions disclosed by WO01/005854, WO04/083268 and WO09/07538 have a problem that photochromic properties must be not a little sacrificed in order to ensure the mechanical strength of the obtained cured product.

Meanwhile, WO03/011967 and WO05/014717 disclose photochromic curable compositions comprising a combination of an adhesive component such as a compound having a silanol group, a compound having an isocyanate group or an amine compound, a radically polymerizable monomer and a chromene compound. By using the curable compositions, a photochromic coating layer having excellent adhesion to a plastic lens can be formed. Since the coating method makes it possible to design a coating layer relatively freely as the mechanical strength of a plastic lens itself is ensured, a photochromic lens (optical article) having excellent photochromic properties, especially high fading speed, can be easily obtained.

However, the photochromic curable compositions disclosed by WO03/011967 and WO05/014717 have room for improvement as the hardness of the obtained cured products is low. Further, since mass-production is impossible with the coating method as compared with the in-mass method, the coating method has room for improvement in terms of productivity.

Although the lamination method disclosed by WO01/005854 provides excellent photochromic properties and has excellent productivity, it cannot be put to practical use as adhesion between a plastic lens and a photochromic layer is unsatisfactory in the prior art.

However, due to growing demand for the improved performance of a photochromic plastic lens, a photochromic curable composition which can provide a higher-performance lens has been desired.

For example, in order to obtain excellent properties, that is, high color optical density and high fading speed for photochromic eyeglasses, a photochromic coating layer formed by the above coating method must be made soft. As a result, the mechanical strength of the photochromic coating layer degrades, whereby the photochromic coating layer is easily scratched in a lens processing step, for example, a step for polishing the rear surface of a lens to obtain a desired diopter, or a step for trimming the peripheral part of a lens in accordance with a frame form.

To cope with the above problems, the applicant of the present invention proposes a photochromic curable composition which comprises a silsesquioxane compound for forming a hard structure to obtain both mechanical strength and photochromic properties at the same time (WO13/008825).

However, it was found by studies conducted by the inventors of the present invention that there is a case where adhesion between a plastic lens and a photochromic layer is low in the method disclosed by WO13/008825.

### DISCLOSURE OF THE INVENTION

### Problems to Be Solved by the Invention

It is therefore an object of the present invention to provide a novel photochromic curable composition which can be advantageously used for the manufacture of a photochromic cured product having an excellent photochromic function and a cured product obtained by curing the photochromic curable composition, particularly a photochromic curable composition capable of obtaining a laminate having high adhesion in the lamination method.

It is another object of the present invention to provide a silsesquioxane monomer used in the photochromic curable composition of the present invention and a method of producing the same.

Other objects and advantages of the present invention will become apparent from the following description.

### Means for Solving the Problem

That is, the inventors of the present invention conducted intensive studies to solve the above problems. As a result, they found that the above problems can be solved by accurately controlling the acid value of a silsesquioxane monomer having a radically polymerizable group. The present invention was accomplished based on this finding.

Therefore, the first invention is a photochromic curable composition comprising a silsesquioxane monomer having a radically polymerizable group and an acid value of 0.5 to 2.0 mgKOH/g (may be simply referred to as "component (A1)" hereinafter) and (B) a photochromic compound (may be simply referred to as "component (B)" hereinafter).

Preferably, the above component (A1) has a weight average molecular weight of 1,500 to 20,000, the radically polymerizable group is an acrylic group or a methacrylic group, and the above component (B) contains a compound having an indeno[2,1-f]naphto[1,2-b]pyran skeleton.

The second invention is a photochromic laminate obtained by curing the photochromic curable composition.

The third invention is the above component (A1) and a production method thereof.

### BEST MODE FOR CARRYING OUT THE INVENTION

### <silsesquioxane monomer having a radically polymerizable group and an acid value of 0.5 to 2.0 mgKOH/g>

The silsesquioxane monomer as the component (A1) is represented by the following formula (3).

(R^{A}-SiO_{3/2})_{g} (3)

In the above formula, "g" is a number of 6 to 100 which indicates the degree of polymerization, and R^{A} is an organic group having a radically polymerizable group, hydroxyl group, hydrogen atom, alkyl group, cycloalkyl group, alkoxy group or phenyl group, with the proviso that at least 3 R^{A}'s are organic groups having a radically polymerizable group and a "g" number of R^{A}'s have a hydroxyl group in an amount that ensures that the acid value of the silsesquioxane monomer (A1) of this formula (3) satisfies 0.5 to 2.0 mgKOH/g.

The organic group having a radically polymerizable group represented by R^{A} includes an organic group having a polymerizable group (such as (meth) acrylic group) bonded to a silicon atom directly. Examples of the organic group include organic groups having a (meth) acrylic group such as (meth) acrylic group, (meth)acryloxypropyl group or (3-(meth)acryloxypropyl)dimethylsiloxy group; organic groups having an allyl group such as allyl group, allylpropyl group or allylpropyldimethylsiloxy group; organic groups having a vinyl group such as vinyl group, vinylpropyl group or vinyldimethylsiloxy group; organic groups having a cyclohexenyl group such as (4-cyclohexenyl)ethyldimethylsiloxy group; organic groups having a norbornenyl group such as norbornenylethyl group or norbornenylethyldimethylsiloxy group; and organic groups having a maleimide group such as N-maleimidepropyl group. Out of these, organic groups having a (meth)acrylic group are particularly preferred as they can obtain high film strength while exhibiting excellent photochromic properties.

The alkyl group represented by R^{A} is preferably an alkyl group having 1 to 10 carbon atoms. Examples of the alkyl group having 1 to 10 carbon atoms include methyl group, ethyl group, n-propyl group, isopropyl group, n-butyl group, sec-butyl group, tert-butyl group, n-pentyl group, n-hexyl group, n-octyl group and isooctyl group.

The cycloalkyl group is preferably a cycloalkyl group having 3 to 8 carbon atoms. Examples of the cycloalkyl group having 3 to 8 carbon atoms include cyclopropyl group, cyclobutyl group, cyclooctyl group, cyclohexyl group, cycloheptyl group and cyclooctyl group.

The alkoxy group is preferably an alkoxy group having 1 to 6 carbon atoms. Examples of the alkoxy group having 1 to 6 carbon atoms include methoxy group, ethoxy group, n-propoxy group, isopropoxy group, n-butoxy group, sec-butoxy group and tert-butoxy group.

Since the component (A1) has an acid value of 0.5 to 2.0 mgKOH/g, some of R^{A}'s are existent as hydroxyl groups. The acid value is determined based on the balance with the degree "g" of polymerization.

R^{A}'s are particularly preferably the above organic groups having a radically polymerizable group except for hydroxyl groups which ensure that the acid value of the component (A1) becomes 0.5 to 2.0 mgKOH/g. Thereby, a cured product obtained from the photochromic curable composition exhibits excellent adhesion.

"g" is an integer of 6 to 100 which indicates the degree of polymerization. "g" is an integer of preferably 8 to 50, particularly preferably 8 to 30 from the viewpoints of photochromic properties and the mechanical strength of a photochromic cured product.

In general, the silsesquioxane compound may take various structures such as cage-like, ladder-like and random structures. In the present invention, it is preferably a mixture having a plurality of structures.

When the component (A1) has an acid value of less than 0.5 mgKOH/g or more than 2.0 mgKOH/g, adhesion between a cured product obtained from the photochromic curable composition comprising the component (A1) and a plastic lens substrate degrades disadvantageously.

The weight average molecular weight of the component (A1) is preferably 1, 500 to 20,000. When the weight average molecular weight of the component (A1) falls within the above range, the moldability of the photochromic curable composition can be improved, and the control of the acid value becomes easy. Further, the mechanical properties of a cured product obtained from the photochromic curable composition and adhesion between the cured product and the plastic lens substrate can be improved. Further, the component (A1) preferably shows a single peak in the molecular weight distribution chart.

### <production method of silsesquioxane monomer (A1) >

The silsesquioxane monomer having a radically polymerizable group (A1) can be obtained by subjecting an alkoxysilane monomer represented by the following formula (4) :

R^{A'}-Si(OR^{B})₃ (4)

(wherein R^{A'} is an organic group containing a radically polymerizable group, and R^{B} is an alkyl group having 1 to 4 carbon atoms)
and an alkoxysilane compound represented by the following formula (4'):

R^{A'}-Si(OR^{B'})₃ (4')

(wherein R^{A"} is a hydrogen atom, alkyl group, cycloalkyl group, alkoxy group or phenyl group, and R^{B'} is an alkyl group having 1 to 4 carbon atoms)
to a hydrolytic reaction and a condensation reaction in the presence of a catalyst. The mixing ratio of the above alkoxysilane monomer to the above alkoxysilane compound is such that at least 3 R^{A'}' s (organic group having a radically polymerizable group) are contained in the obtained silsesquioxane monomer. Most preferably, only the alkoxysilane monomer represented by the above formula (4) is subjected to a hydrolytic reaction and a condensation reaction.

R^{A'} in the above formula (4) is an organic group having a radically polymerizable group. R^{A"} in the above formula (4') is selected from hydrogen atom, alkyl group, cycloalkyl group, alkoxy group and phenyl group. They are defined the same as the organic group having a radically polymerizable group, hydrogen atom, alkyl group, cycloalkyl group, alkoxy group and phenyl group which have been explained for R^{A} in the above general formula (3).

R^{B} and R^{B'} in the above formulas (4) and (4') are each an alkyl group having 1 to 4 carbon atoms, preferably methyl group or ethyl group from the viewpoint of acquisition ease.

The silsesquioxane monomer can be produced by methods disclosed by a cited document (Appl. Organometal. Chem., pp.683-692, 2001) and patent documents (JP-A 2004-143449 and JP-A 11-29640). However, these documents have no description of the acid values of the silsesquioxane monomers produced by known methods. When the inventors of the present invention studied the production methods and the acid values, they found that the acid value can be controlled by selecting a solvent used in the reaction and the reaction temperature. That is, to obtain a silsesquioxane monomer having a radically polymerizable group and an acid value of 0.5 to 2.0 mgKOH/g, the monomer is preferably produced by using methanol or ethanol as a reaction solvent in the presence of a basic catalyst at a temperature of 25 to 40°C. When the reaction temperature is lower than 25°C, the acid value exceeds 2.0 mgKOH/g, and when the reaction temperature is higher than 40°C, the acid value falls below 0.5 mgKOH/g. The acid value is preferably 0.7 to 1.8 mgKOH/g.

Although a known base may be used as the basic catalyst, sodium hydroxide or potassium hydroxide is preferably used and the amount thereof is preferably 0.001 to 0.1 equivalent, more preferably 0.002 to 0.05 equivalent based on the alkoxysilane compound as a raw material. When the amount of the catalyst falls below the above range, the reaction time is prolonged, which is not preferred from the viewpoint of productivity. When the amount of the catalyst exceeds the above range, the radically polymerizable group causes a side reaction such as hydrolysis disadvantageously. When the amount of water used for hydrolysis is 1 equivalent or more based on the alkoxysilane compound as a raw material, it suffices, and generally 1 to 3 equivalents of water is used.

According to the above production method, a silsesquioxane monomer having a radically polymerizable group and an acid value of 0.5 to 2.0 mgKOH/g can be obtained.

### <polyfunctional radically polymerizable monomer (A2)>

The photochromic curable composition of the present invention may comprise a polyfunctional radically polymerizable monomer (A2) represented by the following formula (1).

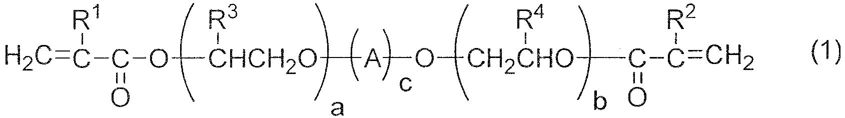

In the above formula, the average value of (a+b) is 2 to 30, "a" is a number of 0 to 30 and "b" is a number of 0 to 30, R¹, R², R³ and R⁴ are each a hydrogen atom or methyl group, and A is a divalent organic group having 1 to 20 carbon atoms which is selected from the following groups: alkylene group, nonsubstituted phenylene group, phenylene group having a halogen atom or alkyl group having 1 to 4 carbon atoms as a substituent, and divalent group represented by the following formula (2a), (2b) or (2c). 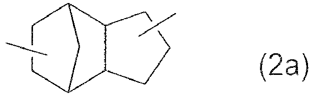 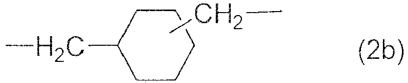 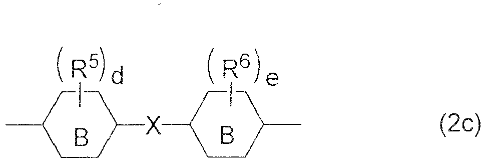 (wherein R⁵ and R⁶ are each an alkyle group having 1 to 4 carbon atoms or halogen atom, "d" and "e" are each an integer of 0 to 4, six-membered ring B is a benzene ring or cyclohexane ring, with the proviso that when the six-membered ring B is a benzene ring, X is a divalent group represented by -0-, -S-, -S(O)₂-, -C(O)-, -CH₂-, -CH=CH-, -C(CH₃)₂- or -C(CH₃) (C₆H₅)-, and when the six-membered ring B is a cyclohexane ring, X is a divalent group represented by -O-, -S-, -CH₂- or -C(CH₃)₂-, and "c" is 0 or 1.)

The polyfunctional radically polymerizable monomer reduces the viscosity of the photochromic curable composition of the present invention, thereby making it easy to handle, and can improve the solubility of the photochromic compound (B) which will be described hereinafter. The obtained cured product can retain excellent photochromic properties, especially high color optical density and high fading speed.

The polyfunctional polymerizable monomer represented by the above formula (1) is generally obtained as a mixture of molecules having different molecular weights. Therefore, "a" and "b" are given as average values. To obtain the above effect, "a" is a number of 0 to 30, "b" is a number of 0 to 30, and the average value of (a+b) is preferably 2 to 30. The average value of (a+b) is more preferably 2 to 15.

In the above formula (1), examples of the alkylene group represented by A include ethylene group, propylene group, butylene group and nonylene group.

Examples of the phenylene group substituted by a halogen atom or alkyl group having 1 to 4 carbon atoms represented by A include dimethylphenyl group, tetramethylphenyl group, dibromophenyl group and tetrabromophenyl group.

Specific examples of the polyfunctional radically polymerizable monomer represented by the above formula (1) which can be advantageously used include ethylene glycol dimethacrylate, diethylene glycol dimethacrylate, triethylene glycol dimethacrylate, tetraethylene glycol dimethacrylate, polyethylene glycol dimethacrylate (average length of ethylene glycol chains of 9, average molecular weight of 536), polyethylene glycol dimethacrylate (average length of ethylene glycol chains of 14, average molecular weight of 736), polyethylene glycol dimethacrylate (average length of ethylene glycol chains of 23, average molecular weight of 1,136), tripropylene glycol dimethacrylate, tetrapropylene glycol dimethacrylate, polypropylene glycol dimethacrylate (average length of propylene glycol chains of 9, average molecular weight of 662), ethylene glycol diacrylate, diethylene glycol diacrylate, triethylene glycol diacrylate, tetraethylene glycol diacrylate, polyethylene glycol diacrylate (average length of ethylene glycol chains of 9, average molecular weight of 508), polyethylene glycol diacrylate (average length of ethylene glycol chains of 14, average molecular weight of 708), dipropylene glycol diacrylate, tripropylene glycol diacrylate, tetrapropylene glycol diacrylate, polypropylene glycol diacrylate (average length of propylene glycol chains of 7, average molecular weight of 536), polypropylene glycol diacrylate (average length of propylene glycol chains of 12, average molecular weight of 808), 1,3-butanediol dimethacrylate, 1,6-hexanediol dimethacrylate, 1,9-nonanediol dimethacrylate, 1,10-decanediol dimethacrylate, neopentyl glycol dimethacrylate, 2,2-bis[4-methacryloxy(polyethoxy)phenyl]propane (average value of (a+b) is 2.3), 2,2-bis[4-methacryloxy(polyethoxy)phenyl]propane (average value of (a+b) is 2.6), 2,2-bis[4-methacryloxy(polyethoxy)phenyl]propane (average value of (a+b) is 4), 2,2-bis[4-methacryloxy(polyethoxy)phenyl]propane (average value of (a+b) is 10), 2,2-bis[4-methacryloxy(polyethoxy)phenyl]propane (average value of (a+b) is 20), 2,2-bis[4-methacryloxy(polyethoxy)phenyl]propane (average value of (a+b) is 30), tricyclodecanedimethanol dimethacrylate, 1,6-hexanediol diacrylate, 1,9-nonanediol diacrylate, 1,10-decanediol diacrylate, neopentyl glycol diacrylate, tricyclodecanedimethanol diacrylate, dioxane glycol diacrylate, ethoxylated cyclohexane dimethanol diacrylate (average value of (a+b) is 4), 2,2-bis[4-acryloxy(polyethoxy)phenyl]propane (average value of (a+b) is 3), 2,2-bis[4-acryloxy(polyethoxy)phenyl]propane (average value of (a+b) is 4) and 2,2-bis[4-acryloxy(polyethoxy)phenyl]propane (average value of (a+b) is 10). Out of these, polyfunctional radically polymerizable monomers of the above formula (1) in which A is an ethylene group or propylene group, or has a skeleton represented by the following formula are preferred as high color optical density is obtained. These polymerizable monomers may be used in combination of two or more.

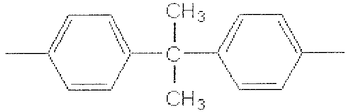

### <isocyanate monomer (A3)>

The photochromic curable composition of the present invention may comprise an isocyanate monomer (A3) represented by the following formula (2).

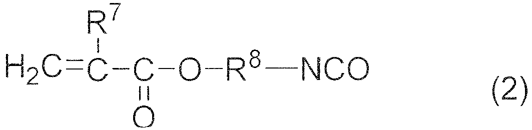

In the above formula, R⁷ is a hydrogen atom or methyl group, and R⁸ is an alkylene group.

R⁷ in the above formula (2) is a hydrogen atom or methyl group.

R⁸ in the above formula (2) is an alkylene group, preferably an alkylene group having 1 to 10 carbon atoms. Examples thereof include methylene group, ethylene group, propylene group, trimethylene group, butylene group, tetramethylene group and hexamethylene group.

Preferred examples of the isocyanate monomer which can be used include 2-isocyanatoethoxy methacrylate.

When the isocyanate compound is added to the photochromic curable composition of the present invention, excellent adhesion to a plastic lens substrate can be obtained at the time of forming a laminate by the lamination method.

### <other radically polymerizable component (A4)>

The photochromic curable composition of the present invention may comprise a radically polymerizable component (A4) except for the components (A1), (A2) and (A3). Examples thereof include polyfunctional radically polymerizable monomers such as trimethylolpropane trimethacrylate, trimethylolpropane triacrylate, tetramethylolmethane trimethacrylate, tetramethylolmethane triacrylate, tetramethylolmethane tetramethacrylate, tetramethylolmethane tetraacrylate, trimethylolpropane triethylene glycol trimethacrylate, trimethylolpropane triethylene glycol triacrylate, ditrimethylolpropane tetramethacrylate, ditrimethylolpropane tetraacrylate, dipentaerythritol hexamethacrylate, dipentaerythritol hexaacrylate, polyester oligomers having four (meth)acrylic groups, and polyester oligomers having six (meth)acrylic groups; monofunctional radically polymerizable monomers such as methoxy diethylene glycol methacrylate, methoxy tetraethylene glycol methacrylate, isostearyl methacrylate, isobornyl methacrylate, phenoxyethylene glycol methacrylate, phenoxyethyl acrylate, phenoxydiethylene glycol acrylate, naphthoxyethylene glycol acrylate, isostearyl acrylate, isobornyl acrylate, glycidyl methacrylate, methoxy polyethylene glycol methacrylate (average length of ethylene glycol chains of 9, average molecular weight of 468), methoxy polyethylene glycol methacrylate (average length of ethylene glycol chains of 23, average molecular weight of 1,068), and phenoxy polyethylene glycol acrylate (average length of ethylene glycol chains of 6, average molecular weight of 412); vinyl monomers such as α-methylstyrene and α-methylstyrene dimer; and allyl monomers such as methoxy polyethylene glycol allyl ether having an average molecular weight of 550, methoxy polyethylene glycol allyl ether having an average molecular weight of 350, methoxy polyethylene glycol allyl ether having an average molecular weight of 1,500, polyethylene glycol allyl ether having an average molecular weight of 450, methoxy polyethylene glycol-polypropylene glycol allyl ether having an average molecular weight of 750, butoxy polyethylene glycol-polypropylene glycol allyl ether having an average molecular weight of 1,600, methacryloxy polyethylene glycol-polypropylene glycol allyl ether having an average molecular weight of 560, phenoxy polyethylene glycol allyl ether having an average molecular weight of 600, methacryloxy polyethylene glycol allyl ether having an average molecular weight of 430, acryloxy polyethylene glycol allyl ether having an average molecular weight of 420, vinyloxy polyethylene glycol allyl ether having an average molecular weight of 560, styryloxy polyethylene glycol allyl ether having an average molecular weight of 650, and methoxy polyethylene thioglycol allyl thioether having an average molecular weight of 730.

Out of these, trimethylolpropane trimethacrylate, trimethylolpropane triacrylate and glycidyl methacrylate are preferably used from the viewpoints of photochromic properties and adhesion to a plastic lens substrate, and α-methylstyrene and α-methylstyrene dimer are preferably used from the viewpoint of the moldability of a photochromic laminate.

### <blending ratio of polymerizable components>

The photochromic curable composition of the present invention should comprise a silsesquioxane monomer (A1) having a radically polymerizable group and an acid value of 0.5 to 2.0 mgKOH/g per unit weight (g) as a radically polymerizable component (A) such as component (A1), (A2), (A3) or (A4). It may comprise a polymerizable component except for the component (A1) in order to improve photochromic properties and adhesion to a plastic lens substrate.

The photochromic curable composition of the present invention may comprise the components (A2), (A3) and (A4) in addition to the component (A1). The content of each component may be determined according to use purpose. Preferably, 10 to 100 mass% of the component (A1), 0 to 70 mass% of the component (A2), 0 to 20 mass% of the component (A3) and 0 to 50 mass% of the component (A4) are contained based on 100 mass% of the radically polymerizable component (A). More preferably, 15 to 60 mass% of the component (A1), 20 to 70 mass% of the component (A2), 0 to 10 mass% of the component (A3) and 5 to 40 mass% of the component (A4) are contained.

### <photochromic compound (B) >

As the photochromic compound which is used in the photochromic curable composition of the present invention, known photochromic compounds such as chromene compounds, fulgimide compounds, spirooxazine compounds and spiropyran compounds may be used without restriction. They may be used alone or in combination of two or more.

The above fulgimide compounds, spirooxazine compounds, spiropyran compounds and chromene compounds are disclosed in, for example, JP-A 2-28154, JP-A 62-288830, WO94/22850 and WO96/14596.

Besides those described in the above patent documents, chromene compounds having excellent photochromic properties are already known and may be preferably used. The chromene compounds are disclosed in JP-A 2001-031670, JP-A 2001-011067, JP-A 2001-011066, JP-A 2000-344761, JP-A 2000-327675, JP-A 2000-256347, JP-A 2000-229976, JP-A 2000-229975, JP-A 2000-229974, JP-A 2000-229973, JP-A 2000-229972, JP-A 2000-219678, JP-A 2000-219686, JP-A 11-322739, JP-A 11-286484, JP-A 11-279171, JP-A 09-218301, JP-A 09-124645, JP-A 08-295690, JP-A 08-176139, JP-A 08-157467, US Patent No. 5645767, US Patent No. 5658501, US Patent No. 5961892, US Patent No. 6296785, Japanese Patent No. 4424981, Japanese Patent No. 4424962, WO2009/136668, WO2008/023828, Japanese Patent No. 4369754, Japanese Patent No. 4301621, Japanese Patent No. 4256985, WO2007/086532, JP-A 2009-120536, JP-A 2009-67754, JP-A 2009-67680, JP-A 2009-57300, Japanese Patent No. 4195615, Japanese Patent No. 4158881, Japanese Patent No. 4157245, Japanese Patent No. 4157239, Japanese Patent No. 4157227, Japanese Patent No. 4118458, JP-A 2008-74832, Japanese Patent No. 3982770, Japanese Patent No. 3801386, WO2005/028465, WO2003/042203, JP-A 2005-289812, JP-A 2005-289807, JP-A 2005-112772, Japanese Patent No. 3522189, WO2002/090342, Japanese Patent No. 3471073, JP-A 2003-277381, WO2001/060811, WO2000/071544, WO2005/028465, WO2011/16582, WO2011/034202 and WO2012/121414.

At least one chromene compound having an indenonaphtho[2,1-f]naphto[1,2-b]pyran skeleton out of these photochromic compounds is preferably used from the viewpoint of photochromic properties such as color optical density, initial coloration, durability and fading speed. Out of these chromene compounds, compounds having a molecular weight of 540 or more are preferred as they are particularly excellent in color optical density and fading speed. Examples thereof are given below.

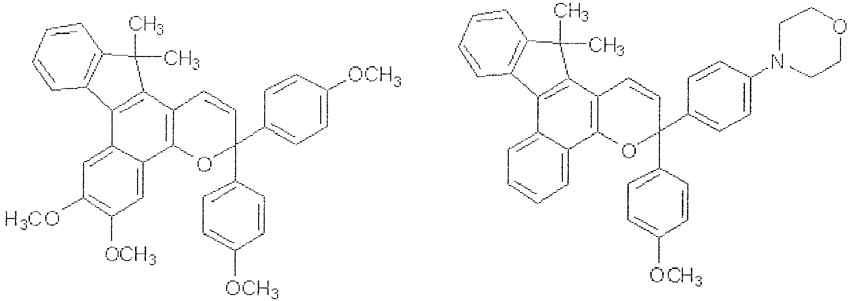

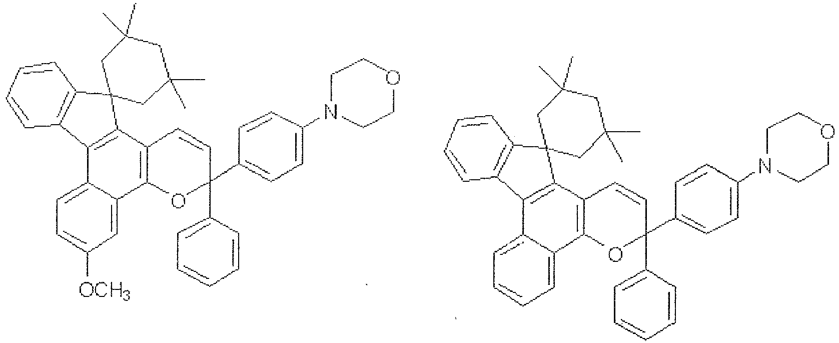

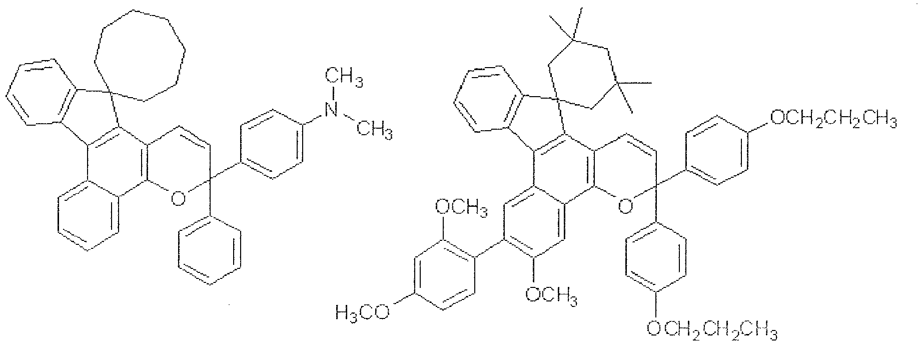

### <amount of photochromic compound (B) >

In the photochromic curable composition of the present invention, the amount of the photochromic compound (B) is preferably 0.01 to 20 parts by weight based on 100 parts by weight of the total of all the radically polymerizable components. When the amount is too small, sufficiently high color optical density and durability may not be obtained, and when the amount is too large, depending on the type of the photochromic compound, the photochromic composition is hardly dissolved in the radically polymerizable components with the result that the homogeneity of the composition tends to degrade and adhesion to a plastic substrate tends to deteriorate. To retain adhesion to a plastic lens substrate completely while retaining photochromic properties such as color optical density and durability, the amount of the photochromic compound (B) is more preferably 0.03 to 10 parts by mass, particularly preferably 0.05 to 5 parts by mass based on 100 parts by mass of the total of all the radically polymerizable components.

### <other compounding agents, production method of photochromic curable composition>

The photochromic curable composition of the present invention may be mixed with stabilizers and additives such as release agent, ultraviolet absorbent, infrared absorbent, ultraviolet stabilizer, antioxidant, coloring inhibitor, antistatic agent, fluorescent dye, dye, pigment and flavoring agent as required besides the above radically polymerizable components (components (A1), (A2), (A3) and (A4)) and the photochromic compound (component (B)).

Especially when an ultraviolet stabilizer is used, the durability of the photochromic compound can be further improved advantageously. As the ultraviolet stabilizer, a hindered amine optical stabilizer, a hindered phenol antioxidant and a sulfur-based antioxidant may be preferably used. Preferred examples thereof include bis(1,2,2,6,6-pentamethyl-4-piperidyl)sebacate, the ADK STAB LA-52, LA-57, LA-62, LA-63, LA-67, LA-77, LA-82 and LA-87 of ADEKA Corporation, 2,6-di-t-butyl-4-methyl-phenol, 2,6-ethylenebis(oxyethylene)bis[3-(5-t-butyl-4-hydroxy-m -tolyl)propionate], and IRGANOX 1010, 1035, 1075, 1098, 1135, 1141, 1222, 1330, 1425, 1520, 259, 3114, 3790, 5057 and 565 of CIBA SPECIALTY CHEMICALS INC. The amount of this ultraviolet stabilizer is not particularly limited but preferably 0.001 to 10 parts by mass, more preferably 0.01 to 3 parts by mass based on 100 parts by mass of the total of all the radically polymerizable components. Especially when a hindered amine optical stabilizer is used, if it is too large in quantity, there is a difference in the effect of improving durability among compounds, whereby a color shift of the developed color may occur. Therefore, the hindered amine optical stabilizer is used in an amount of preferably 0.5 to 30 moles, more preferably 1 to 20 moles, much more preferably 2 to 15 moles based on 1 mole of the above photochromic compound (the number of moles of the hindered amine compound is based on 1 mole of the hindered amine moiety).

The photochromic curable composition of the present invention is preferably mixed with a radical polymerization initiator. Typical examples of the polymerization initiator include thermal polymerization initiators such as diacyl peroxides including benzoyl peroxide, p-chlorobenzoyl peroxide, decanoyl peroxide, lauroyl peroxide and acetyl peroxide; peroxy esters including t-butylperoxy-2-ethyl hexanoate, t-butyl peroxyneodecanoate, cumyl peroxyneodecanoate and t-butyl peroxybenzoate; percarbonates including diisopropyl peroxydicarbonate and di-sec-butyl peroxydicarbonate; and azo compounds such as azobisisobutyronitrile. Examples of the optical polymerization initiator include acetophenone-based compounds such as 1-phenyl-2-hydroxy-2-methylpropan-1-one, 1-hydroxycyclohexylphenyl ketone and 1-(4-isopropylphenyl)-2-hydroxy-2-methylpropan-1-one; α-dicarbonyl-based compounds such as 1,2-diphenylethanedione and methylphenyl glyoxylate; and acylphosphine oxide-based compounds such as 2,6-dimethylbenzoyl diphenylphosphine oxide, 2,4,6-trimethylbenzoyl diphenylphosphine oxide, 2,4,6-trimethylbenzoyl diphenylphosphinic acid methyl ester, 2,6-dichlorobenzoyl diphenylphosphine oxide and 2,6-dimethoxybenzoyl diphenylphosphine oxide. These polymerization initiators may be used alone or in combination of two or more. A thermal polymerization initiator and an optical polymerization initiator may be used in combination. When an optical polymerization initiator is used, a known polymerization accelerator such as a tertiary amine may be used.

In the present invention, when the above radical polymerization initiator is used, the amount thereof is preferably 0.001 to 10 parts by mass, more preferably 0.01 to 5 parts by mass based on 100 parts by mass of the total of all the radically polymerizable components.

The photochromic curable composition of the present invention can be produced by mixing together the components (A2), (A3) and (A4) and optionally the above compounding agents and radical polymerization initiator in addition to the component (A1) and the photochromic compound (B) in accordance with an known method.

### <photochromic cured product, photochromic laminate, and production processes thereof>

A polymerization process for obtaining a cured product from the photochromic curable composition of the present invention is not particularly limited, and a known radical polymerization process may be employed. As polymerization initiating means, the irradiation of heat, ultraviolet-ray, α-ray, β-ray or γ-ray, or both of them may be used. At this point, a radical polymerization initiator such as the above-described thermal polymerization initiator or optical polymerization initiator is preferably added to the photochromic curable composition of the present invention.

A typical example of the polymerization process for the lamination method in which the photochromic curable composition of the present invention can be used effectively is a process in which the photochromic curable composition of the present invention prepared by mixing a thermal polymerization initiator is injected into a space between a glass mold and a plastic lens substrate held by an elastomer gasket or a spacer to be thermally polymerized and cured in an air furnace or water bath, or a process in which the photochromic curable composition of the present invention prepared by mixing an optical polymerization initiator is injected and irradiated with light from a glass mold side to be optically polymerized and then the glass mold is removed to obtain a laminate.

The above plastic lens substrate is typically (meth)acrylic resin, polycarbonate-based resin, allyl-based resin, thiourethane-based resin, urethane-based resin or thioepoxy-based resin, and the photochromic curable composition of the present invention and a cured product thereof may be used with any plastic lens substrate.

The thickness of a photochromic laminate formed by the lamination method can be adjusted by the space between the glass mold and the plastic lens substrate but preferably 150 to 1, 500 µm. When the thickness is smaller than 150 µm, the photochromic compound is susceptible to oxidation degradation and there may occur a problem with repeat durability, and when the thickness is larger than 1,500 µm, there may occur a problem that the plastic lens substrate is deformed by shrinkage at the time of polymerizing the photochromic curable composition of the present invention.

Although the laminate obtained by curing the photochromic curable composition of the present invention has excellent adhesion to the plastic lens substrate, to further improve the adhesion, an adhesive layer may be formed on the plastic lens substrate. A known adhesive may be used for the adhesive layer whose thickness is preferably 0.1 to 100 µm, more preferably 0.1 to 20 µm.

A known adhesive may be used as the adhesive used in the present invention. Examples of the adhesive include water-dispersible polymer compositions such as water-dispersible polyurethane resin, water-dispersible polyester resin, water-dispersible acrylic resin and water-dispersible polyurethane·acrylic resin; polymerizable monomer compositions having an optically curable (meth)acrylic group; and moisture-curable or two-liquid curable polyurethane resin compositions.

Since a photochromic lens of the lamination method obtained by using the above photochromic curable composition (may be also referred to as "photochromic laminate") has higher hardness than a normal plastic lens substrate, it can be used directly after it is polished or trimmed. However, to prevent the occurrence of scratching at the time of wearing, a hard coating layer may be formed on the photochromic lens before use.

As a coating agent (hard coating agent) for forming the hard coating layer, any known coating agent may be used. Examples thereof include silane coupling agents, hard coating agents containing silicon, zirconium, antimony, aluminum or titanium oxide sol as the main component, and hard coating agents containing an organic polymer as the main component.

Since the photochromic laminate of the present invention contains the component (A1), a hard coating layer having sufficiently high adhesion can be formed without carrying out a known pre-treatment before the formation of the hard coating layer. To further improve adhesion between the photochromic laminate of the present invention and the hard coating layer, it is effective to subject the surface of the photochromic laminate to an alkali treatment, acid treatment, treatment with a surfactant, UV ozone treatment, polishing with inorganic or organic fine particles, primer treatment, or plasma or corona discharge.

As coating or curing means, the coating composition may be coated by dipping, spin coating, spray or flow method.

As curing means after coating, the coating composition is dried with dry air or in the air and heated at a temperature at which the photochromic laminate is not deformed to be cured so as to form a hard coating layer.

The surface of the photochromic laminate of the present invention may be further subjected to an antireflection treatment such as the deposition of a thin film of a metal oxide such as SiO₂, TiO₂ or ZrO₂, or the formation of a thin film of an organic polymer by coating, an antistatic treatment and a secondary treatment as required in addition to the hard coating layer.

### EXAMPLES

The following examples are provided for the purpose of further illustrating the present invention but are in no way to be taken as limiting.

### (synthesis of silsesquioxane (A1) having a radically polymerizable group)

### <synthesis of PMS1>

248 ml of ethanol and 54 g (3.0 moles) of water were added to 248 g (1.0 mole) of 3-trimethoxysilylpropyl methacrylate, and 0.20 g (0.005 mole) of sodium hydroxide as a catalyst was added to the mixture to carry out a reaction at 30°C for 3 hours. After it was confirmed that the raw materials were gone, the reaction product was neutralized with diluted hydrochloric acid, and 174 ml of toluene, 174 ml of heptane and 174 g of water were added to remove a water layer. Thereafter, an organic layer was rinsed until the water layer became neutral, and a silsesquioxane monomer (PMS1) was obtained by concentrating the solvent. It was confirmed by ¹H-NMR that the raw materials were completely consumed. Also, it was confirmed by ²⁹Si-NMR that the obtained product was a mixture having cage-like, ladder-like and random structures.

The acid component contained in the silsesquioxane monomer (PMS1) was evaluated to determine the acid value by carrying out the following titration.

A 0.1 mol/L potassium hydroxide alcohol solution (ethanolic) liquid (to be referred to as "measurement liquid" hereinafter) was set in a 2 ml micro-burette to prepare a stirrer. A measuring cylinder was used to accurately weigh 50 ml of ethanol and 50 ml of toluene which were then put into a 200 ml beaker and mixed with the stirrer under agitation. Three drops of a phenolphthalein solution were added to carry out empty titration with a titration liquid. To a liquid after empty titration, 20g of a sample was added, then mixed with a stirrer under agitation and further additions of three drops of phenolphthalein solution and a titration liquid were carried out to obtain an amount of the titration liquid. The acid value was calculated based on the following equation. Acid value (mgKOH/g) = amount of titration (ml) x titration liquid "f" x 5.6 ÷ amount of sample

In the above equation, "f" denotes the factor of the titration liquid obtained by using a standard hydrochloric acid solution. "f" of the N/10 potassium hydroxide alcohol solution used in the above method was 0.094. The amount of the sample was the weight of the silsesquioxane monomer contained in the sample.

The acid value of PMS1 measured by this method was 1.1 mgKOH/g.

The molecular weight distribution of the silsesquioxane monomer (PMS1) was measured by gel permeation chromatography (GPC).

A liquid chromatograph (manufactured by Nihon Waters K.K.) was used as the apparatus. Shodex GPC KF-802 (exclusion limit molecular weight of 5,000, manufactured by Showa Denko K.K.), Shodex GPC GPC KF802.5 (exclusion limit molecular weight of 20, 000, manufactured by Showa Denko K. K.) and Shodex GPC KF-803 (exclusion limit molecular weight of 70,000, manufactured by Showa Denko K.K.) were used as columns.

Tetrahydrofuran was used as a developing liquid to measure the acid value at a flow rate of 1. ml/min and a temperature of 40°C. When polystyrene was used as a standard sample to obtain weight average molecular weight and polydispersity by comparison and conversion, PMS1 had a weight average molecular weight of 4, 800 and a polydispersity of 1.40.

### <synthesis of PMS2 to PSM6>

Silsesquioxane monomers (A1) were synthesized in the same manner as PMS1 by using raw materials and reaction conditions shown in Table 1. The acid values and molecular weight distributions of these monomers were measured in the same manner as PMS1. The results are shown in Table 1.

**Table 1**

| Abb. | Raw material | Solvent | Base | Reaction temperature | Acid value mgKOH/g | Weight average molecular weight | Polydispersity |
|---|---|---|---|---|---|---|---|
| PMS1 | 3-trimethoxysilyl-propyl methacrylate 1.0mol | ethanol 248ml | sodium hydroxide 0.05mol | 30°C | 1.1 | 4.8 x 10³ | 1.40 |
| PMS2 | 3-trimethoxysilyl-propyl methacrylate 1.0mol | ethanol 248ml | sodium hydroxide 0.05mol | 45°C | 0.7 | 3.2 x 10³ | 1.22 |
| PMS3 | 3-triethoxysilyl-propyl acrylate 1.0mol | ethanol 248ml | potassium hydroxide 0.05mol | 30°C | 1.3 | 5.3 x 10³ | 1.43 |
| PMS4 | 3-trimethoxysilyl-propyl methacrylate 1.0mol | methanol 248ml | sodium hydroxide 0.05mol | 25°C | 1.8 | 6.8 x 10³ | 1.52 |
| PMS5 | 3-trimethoxysilyl-propyl methacrylate 0.8mol methyl trimethoxysilane 0.2mol | methanol 248ml | sodium hydroxide 0.03mol | 30°C | 1.3 | 4.2 x 10³ | 1.38 |
| PMS6 | 3-triethoxysilyl-propyl acrylate 1.0mol | ethanol 124ml | sodium hydroxide 0.03mol | 30°C | 1.7 | 7.2 x 10³ | 1.59 |

| | | | | | | | |
|---|---|---|---|---|---|---|---|
| Abb.: Abbreviation | | | | | | | |

### (manufacture and evaluation of photochromic cured product)

The abbreviations and names of compounds used in the following examples are given below. Polyfunctional radically polymerizable monomer (A2): BPE500: 2,2-bis(4-methacryloyloxypolyethoxyphenyl)propane (average length of ethylene glycol chains of 10, average molecular weight of 804)

### A-BPE:

### 2,2-bis(4-acryloyloxypolyethoxyphenyl)propane

### (average length of ethylene glycol chains of 10, average molecular weight of 776)

9G: polyethylene glycol dimethacrylate (average length of ethylene glycol chains of 9, average molecular weight of 536)
14G: polyethylene glycol dimethacrylate (average length of ethylene glycol chains of 14, average molecular weight of 770)
A400: polyethylene glycol diacrylate (average length of ethylene glycol chains of 9, average molecular weight of 508)
3PG: tripropylene glycol dimethacrylate (average length of propylene glycol chains of 3, average molecular weight of 328)

### Isocyanate monomer (A3)

IEM: 2-isocyanatoethoxy methacrylate

### Other radically polymerizable component (A4);

TMPT: trimethylolpropane trimethacrylate
M90G: methoxy polyethylene glycol methacrylate (average length of ethylene glycol chains of 9, average molecular weight of 968)
GMA: glycidyl methacrylate
αMS : alpha α-methylstyrene
MSD: alpha α-methylstyrene dimer

### Photochromic compound (B);

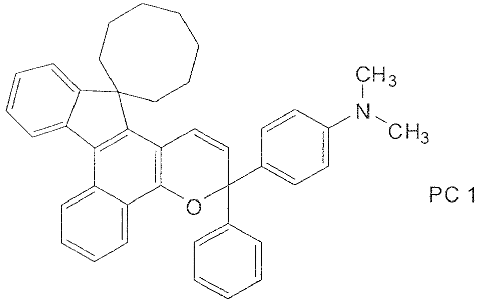

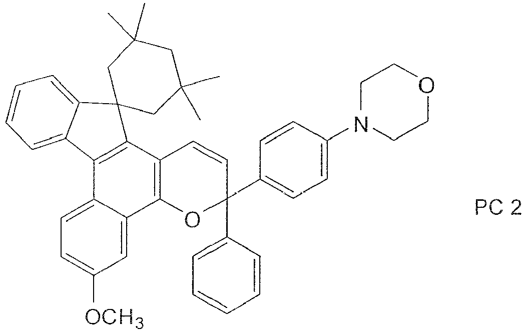

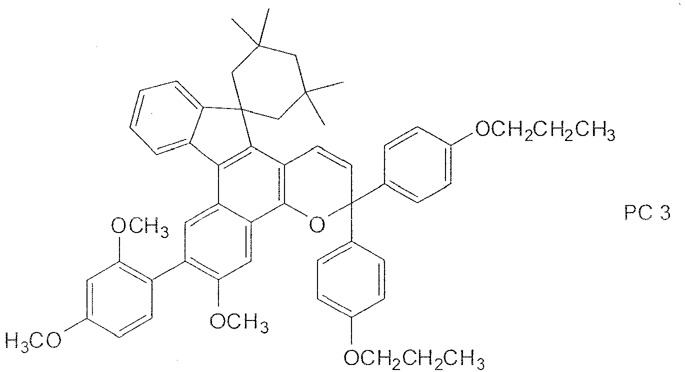

### Example 1

The following components were mixed together to prepare a radically polymerizable component (A).

### Silsesquioxane monomer (A1)

PMS1: 20 parts by weight

### Polyfunctional radically polymerizable monomers (A2)

BPE500: 50 parts by weight
9G: 20 parts by weight

### Other radically polymerizable monomers (A4)

GMA: 1 part by weight
αMS: 8 parts by weight
MSD: 1 part by weight

0.2 part by weight of PC1 (photochromic compound (B)) and 1 part by weight of perbutyl ND (polymerization initiator) were fully mixed with 100 parts by weight of the radically polymerizable component (A) prepared as described above to obtain a photochromic curable composition.

This curable composition was injected into a mold sandwiched between a glass sheet and a thiourethane-based resin plastic substrate having a refractive index of 1.60 by using a gasket made of an ethylene-vinyl acetate copolymer to carry out cast polymerization. Polymerization was carried out in an air furnace by gradually raising the temperature from 30°C to 90°C over 18 hours and keeping the temperature at 90°C for 2 hours, and after the end of polymerization, the glass sheet was removed to obtain a photochromic laminate having a 0.5 mm-thick cured product of the photochromic curable composition and the 2 mm-thick plastic lens substrate adhered to the cured product. The obtained photochromic laminate had photochromic properties with a maximum absorption wavelength of 588 nm, a color optical density of 0.83 and a fading speed of 63 seconds and adhesion B. These evaluations were carried out as follows.

### Photochromic properties

The obtained photochromic laminate (thickness of photochromic layer of 500 µm) was used as a sample and irradiated with light having a beam intensity at 365 nm of 2.4 mW/cm² on the surface of the polymer and at 245 nm of 24 µW/cm² from the L-2480 (300W) SHL-100 xenon lamp of Hamamatsu Photonics K.K. through an aero-mass filter (of Corning Incorporated) at 20°C±1°C for 120 seconds to develop color so as to measure the photochromic properties of the above laminate. The photochromic properties were evaluated by the following methods.
1) Maximum absorption wavelength (λmax): maximum absorption wavelength after color development obtained by the spectrophotometer (instantaneous multi-channel photodetector MCPD1000) of Otsuka Electronics Co., Ltd. The maximum absorption wavelength is connected with color at the time of color development.
2) Color optical density {ε(120) - ε(0)}: difference between absorbance {ε(120)} after 120 seconds of irradiation at the above maximum absorption wavelength and the above absorbance ε(0). It can be said that as this value becomes larger, photochromic properties become more excellent.
3) Fading speed [t1/2(sec.)]: time elapsed until the absorbance at the above maximum wavelength of the specimen drops to 1/2 of {ε(120) - ε(0)} when irradiation is continued for 120 seconds and then stopped. It can be said that as the time becomes shorter, decoloring becomes quicker which means that photochromic properties are excellent.

### Adhesion

The adhesion of the obtained photochromic laminate was evaluated. As an evaluation method, the obtained photochromic laminate was immersed in 1.00°C boiling water and the adhesion of the photochromic laminate was visually evaluated every one hour. The evaluation criteria are given below.
S: adhesion is satisfactory after 3 hours of immersion
A: adhesion is satisfactory after 2 hours of immersion but part of the laminate peels off after 3 hours of immersion
B: adhesion is satisfactory after 1 hour of immersion but part of the laminate peels off after 2 hours of immersion
C: part of the laminate peels off after 1 hour of immersion
D: a plurality of parts of the laminate peel off after 1 hour of immersion
E: 50 % or more of the area of the laminate peels off after 1 hour of immersion

### Examples 2 to 11

Photochromic curable compositions were prepared in the same manner as in Example 1 except that radically polymerizable components and photochromic compounds shown in Table 2 were used. Further, photochromic laminates were manufactured and evaluated in the same manner as in Example 1. The evaluation results are shown in Table 3.

**Table 2**

| | Radically polymerizable component (A) (parts by weight) | | | | Photochromic compound |
|---|---|---|---|---|---|
| | Component A1 | Component A2 | Component A3 | Component A4 | Component B |
| Example 1 | PMS1 (30) | | - | GMA (1) | PC1 (0.1) |
| | | BPE500 (40) | | α MS (8) | |
| | | 9G (20) | | MSD (1) | |
| Example 2 | PMS1 (30) | | IEM (5) | GMA (1) | PC1 (0.1) |
| | | BPE500 (35) | | α MS (8) | |
| | | 9G (20) | | MSD (1) | |
| Example 3 | PMS5(30) | | IEM(5) | GMA (1) | PC1 (0.1) |
| | | BPE500 (40) | | α MS (8) | |
| | | 9G (20) | | MSD (1) | |
| Example 4 | PMS4(45) | | - | TMPT (15) | PC1 (0.1) |
| | | 14G (15) | | GMA (1) | |
| | | A400 (15) | | α MS (8) | |
| | | | | MSD (1) | |
| Example 5 | PMS2(20) | | - | TMPT (10) | PC1 (0.1) |
| | | BPE500 (30) | | GMA(1) | |
| | | 9G (30) | | α MS (8) | |
| | | | | MSD (1) | |
| Example 6 | PMS4(20) | BPE500 (30) | - | GMA (1) | PC1 (0.1) |
| | | 9G (30) | | α MS (8) | |
| | | | | MSD (1) | |
| Example 7 | PMS3(15) | | IEM(5) | TMPT (10) | PC1 (0.1) |
| | | BPE500 (30) | | GMA (1) | |
| | | 9G (30) | | α MS (8) | |
| | | | | MSD (1) | |
| Example 8 | PMS2(50) | | - | TMPT (10) | PC1 (0.1) |
| | | 3PG (20) | | GMA(1) | |
| | | M90G (10) | | α MS (8) | |
| | | | | MSD (1) | |
| Example 9 | PMS1 (30) | BPE500 (40) | IEM(5) | - | PC2 (0.1) |
| | | 9G (25) | | | |
| Example 10 | PMS1 (50) | - | IEM(10) | TMPT (30) | PC3 (0.1) |
| | | | | GMA (1) | |
| | | | | α MS (8) | |
| | | | | MSD (1) | |
| Example 11 | PMS6(30) | | IEM(5) | TMPT (10) | PC1 (0.3) PC3 (0.7) |
| | | A- BPE (25) | | GMA (1) | |
| | | 9G (20) | | α MS (8) | |
| | | | | MSD (1) | |

**Table 3**

| | Maximum absorption wavelength | Color optical density | Fading speed | Adhesion |
|---|---|---|---|---|
| | *λ* max | *ε* (120)-ε (0) | t1/2 (sec) | |
| Example 1 | 588 | 0.83 | 63 | B |
| Example 2 | 588 | 0.83 | 62 | S |
| Example 3 | 590 | 0.82 | 63 | S |
| Example 4 | 580 | 0.92 | 47 | A |
| Example 5 | 588 | 0.85 | 53 | C |
| Example 6 | 588 | 0.85 | 53 | B |
| Example 7 | 586 | 0.87 | 52 | A |
| Example 8 | 576 | 0.91 | 45 | A |
| Example 9 | 580 | 0.75 | 68 | S |
| Example 10 | 570 | 0.63 | 70 | S |
| Example 11 | 574 | 0.72 | 61 | S |

For comparison, the following silsesquioxane monomers were synthesized.

### Silsesquioxane monomer PMS-R1;

This was synthesized from 3-trimethoxysilylpropyl methacrylate in accordance with a production method disclosed in Patent Document (JP-A 2004-143449). (acid value of 0. 3 mgKOH/g, weight average molecular weight of 1.8 x 10³, polydispersity of 1.08)

### Silsesquioxane monomer PMS-R2;

This was synthesized in the same manner as PMS1 except that the reaction temperature was changed to 20°C and the reaction solvent was changed to 2-propanol. (acid value of 2.3 mgKOH/g, weight average molecular weight of 6.6 x 10³, polydispersity of 1.41)

### Silsesquioxane monomer PMS-R3;

This was synthesized in the same manner as PMS1 except that the reaction solvent was not used (solvent-free) and the reaction temperature was changed to 5°C. (acid value of 8.4 mgKOH/g, weight average molecular weight of 22 x 10³, polydispersity of 1.88)

### Comparative Examples 1 to 5

Photochromic curable compositions were prepared in the same manner as in Example 1 except that radically polymerizable components and photochromic compounds shown in Table 4 were used. Further, photochromic laminates were manufactured and evaluated in the same manner as in Example 1. The evaluation results are shown in Table 5.

**Table 4**

| | Radically polymerizable component (parts by weight) | | | | Photochromic compound |
|---|---|---|---|---|---|
| | Silsesquioxane monomer | Component A2 | Component A3 | Component A4 | Component B |
| Comparative Example 1 | PMS-R1 (30) | | - | GMA (1) | PC1 (0.1) |
| | | BPE500 (40) | | α MS (8) | |
| | | 9G (20) | | MSD (1) | |
| Comparative Example 2 | PMS-R2 (30) | | - | GMA (1) | PC1 (0.1) |
| | | BPE500 (40) | | α MS (8) | |
| | | 9G (20) | | MSD (1) | |
| Comparative Example 3 | PMS-R3 (30) | | - | GMA (1) | PC1 (0.1) |
| | | BPE500 (40) | | α MS (8) | |
| | | 9G (20) | | MSD (1) | |
| Comparative Example 4 | - | | - | GMA (1) | PC1 (0.1) |
| | | BPE500 (60) | | α MS (8) | |
| | | 9G (30) | | MSD (1) | |
| Comparative Example 5 | - | | IEM(5) | GMA (1) | PC1 (0.1) |
| | | BPE500 (55) | | α MS (8) | |
| | | 9G (30) | | MSD (1) | |

**Table 5**

| | Maximum absorption wavelength | Color optical density | Fading speed | Adhesion |
|---|---|---|---|---|
| | *λ* max | *ε* (120)-*ε* (0) | t1/2 (sec) | |
| Comparative Example 1 | 588 | 0.83 | 64 | D |
| Comparative Example 2 | 588 | 0.83 | 65 | D |
| Comparative Example 3 | 590 | 0.82 | 62 | E |
| Comparative Example 4 | 580 | 0.92 | 89 | E |
| Comparative Example 5 | 588 | 0.85 | 92 | E |

As obvious from the above Examples 1 to 11, photochromic laminates having excellent photochromic properties and adhesion were obtained by using the photochromic curable compositions comprising the silsesquioxane monomer (A1) having a radically polymerizable group and an acid value of 0.5 to 2.0 mgKOH/g in accordance with the present invention.

Meanwhile, when a silsesquioxane monomer having an acid value outside the range of 0.5 to 2.0 mgKOH/g was contained as in Comparative Example 1 to 3 or when no silsesquioxane monomer (A1) was contained as in Comparative Examples 4 and 5, the obtained photochromic laminates were unsatisfactory in terms of adhesion.

### Effect of the Invention

As described above, according to the present invention, a photochromic laminate having excellent photochromic properties and excellent adhesion strength both of which are difficult to be attained at the same time in the prior art can be provided.

## Claims

1. A photochromic curable composition comprising a silsesquioxane monomer (A1) having a radically polymerizable group and an acid value of 0.5 to 2.0 mgKOH/g and a photochromic compound (B).

2. The photochromic curable composition according to claim 1, wherein the silsesquioxane monomer (A1) has a weight average molecular weight of 1,500 to 20,000.

3. The photochromic curable composition according to claim 1, wherein a radically polymerizable group of the silsesquioxane monomer (A1) is an acrylic group or a methacrylic group.

4. The photochromic curable composition according to claim 1, wherein the photochromic compound (B) has an indeno[2,1-f]naphtho[1,2-b]pyran skeleton.

5. The photochromic curable composition according to claim 1 which further comprises a polyfunctional radically polymerizable monomer (A2) represented by the following formula (1). 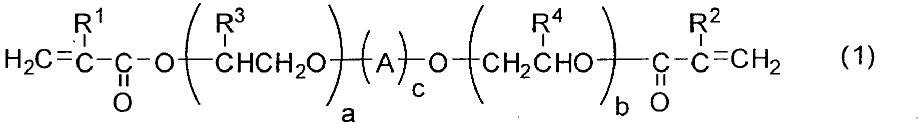 wherein the average value of (a+b) is 2 to 30, "a" is a number of 0 to 30 and "b" is a number of 0 to 30, R¹, R², R³ and R⁴ are each a hydrogen atom or methyl group, and A is a divalent organic group having 1 to 20 carbon atoms selected from the following groups: alkylene group, nonsubstituted phenylene group, phenylene group having a halogen atom or alkyl group having 1 to 4 carbon atoms as a substituent, and divalent group represented by the following formula (2a), (2b) or (2c) : 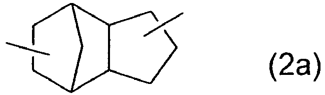 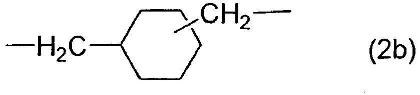 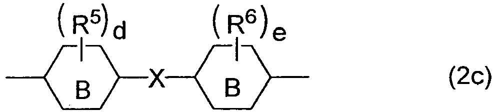 wherein R⁵ and R⁶ are each an alkyl group having 1 to 4 carbon atoms or halogen atom, "d" and "e" are each an integer of 0 to 4, six-membered ring B is a benzene ring or cyclohexane ring, with the proviso that when the six-membered ring B is a benzene ring, X is a divalent group represented by -O-, -S-, -S(O)₂-, -C(O)-, -CH₂-, -CH=CH-, -C(CH₃)₂- or -C(CH₃)(C₆H₅)-, and when the six-membered ring B is a cyclohexane ring, X is a divalent group represented by -O-, -S-, -CH₂- or -C(CH₃)₂-, and "c" is 0 or 1.

6. The photochromic curable composition according to claim 1 which further comprises an isocyanate monomer (A3) represented by the following formula (2). 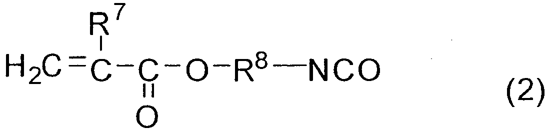 wherein R⁷ is a hydrogen atom or methyl group, and R⁸ is an alkylene group.

7. A photochromic laminate comprising a photochromic cured product having a thickness of 150 to 1,500 µm which is obtained by curing the photochromic curable composition of claim 1 and integrated with a plastic lens substrate.

8. The photochromic laminate according to claim 7 which has an adhesive layer having a thickness of 0.1 to 100 µm between the plastic lens substrate and the photochromic cured product.

9. A silsesquioxane monomer (A1) having a radically polymerizable group and an acid value of 0.5 to 2.0 mgKOH/g.

## Patentansprüche

1. Photochrome härtbare Zusammensetzung, umfassend ein Silsesquioxanmonomer (A1) mit einer radikalisch polymerisierbaren Gruppe und einer Säurezahl von 0,5 bis 2,0 mgKOH/g und eine photochromen Verbindung (B).

2. Photochrome härtbare Zusammensetzung gemäß Anspruch 1, wobei das Silsesquioxanmonomer (A1) ein gewichtsmittleres Molekulargewicht von 1.500 bis 20.000 aufweist.

3. Photochrome härtbare Zusammensetzung gemäß Anspruch 1, wobei eine radikalisch polymerisierbare Gruppe des Silsesquioxanmonomers (A1) eine Acrylgruppe oder eine Methacrylgruppe ist.

4. Photochrome härtbare Zusammensetzung gemäß Anspruch 1, wobei die photochrome Verbindung (B) ein Indeno[2,1-f]naphtho[1,2-b]pyran-Gerüst aufweist.

5. Photochrome härtbare Zusammensetzung gemäß Anspruch 1, welche des Weiteren ein polyfunktionelles radikalisch polymerisierbares Monomer (A2), dargestellt durch die folgende Formel (1), umfasst: 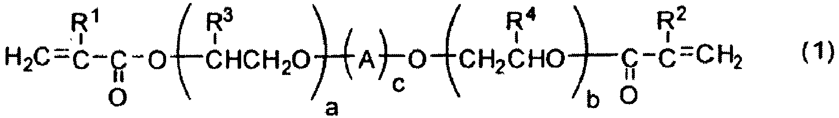 wobei der Durchschnittswert von (a+b) 2 bis 30 beträgt, "a" eine Zahl von 0 bis 30 ist und "b" eine Zahl von 0 bis 30 ist, R¹, R², R³ und R⁴ jeweils ein Wasserstoffatom oder eine Methylgruppe sind, und A eine zweiwertige organische Gruppe mit 1 bis 20 Kohlenstoffatomen ist, ausgewählt aus den folgenden Gruppen: Alkylengruppe, unsubstituierte Phenylengruppe, Phenylengruppe mit einem Halogenatom oder Alkylgruppe mit 1 bis 4 Kohlenstoffatomen als einen Substituenten, und einer zweiwertigen Gruppe, dargestellt durch die folgende Formel (2a), (2b) oder (2c): 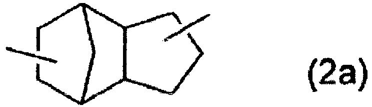 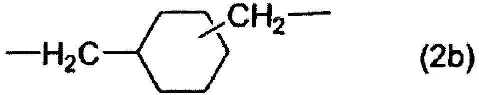 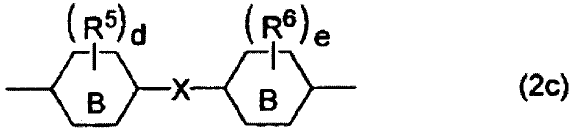 wobei R⁵ und R⁶ jeweils eine Alkylgruppe mit 1 bis 4 Kohlenstoffatomen oder ein Halogenatom sind, "d" und "e" jeweils eine ganze Zahl von 0 bis 4 sind, der sechsgliedrige Ring B ein Benzolring oder Cyclohexanring ist, mit der Maßgabe, dass, wenn der sechsgliedrige Ring B ein Benzolring ist, X eine zweiwertige Gruppe ist, dargestellt durch -0-, -S-, -S(O)₂-, -C(O)-, -CH₂-, -CH=CH-, -C(CH₃)₂- oder -C(CH₃) (C₆H₅)-, und wenn der sechsgliedrige Ring B ein Cyclohexanring ist, X eine zweiwertige Gruppe ist, dargestellt durch -O-, -S-, -CH₂- oder -C(CH₃)₂-, und "c" 0 oder 1 ist.

6. Photochrome härtbare Zusammensetzung gemäß Anspruch 1, welche des Weiteren ein Isocyanatmonomer (A3) umfasst, dargestellt durch die folgende Formel (2): 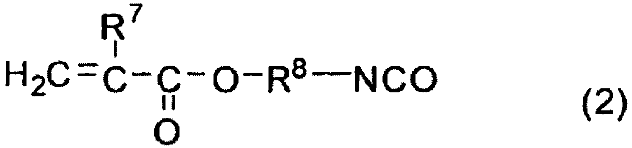 worin R⁷ ein Wasserstoffatom oder eine Methylgruppe ist und R⁸ eine Alkylengruppe ist.

7. Photochromes Laminat, umfassend ein photochromes gehärtetes Produkt mit einer Dicke von 150 bis 1.500 µm, welches erhalten wird durch Härten der photochromen härtbaren Zusammensetzung gemäß Anspruch 1, und eingearbeitet ist in ein Kunststofflinsensubstrat.

8. Photochromes Laminat gemäß Anspruch 7, welches eine Klebeschicht mit einer Dicke von 0,1 bis 100 µm zwischen dem Kunststofflinsensubstrat und dem photochromen gehärteten Produkt aufweist.

9. Silsesquioxanmonomer (A1) mit einer radikalisch polymerisierbaren Gruppe und einer Säurezahl von 0,5 bis 2,0 mgKOH/g.

## Revendications

1. Composition durcissable photochromique comprenant un monomère de silsesquioxane (A1) ayant un groupe polymérisable par voie radicalaire et présentant un indice d'acidité de 0,5 à 2,0 mg de KOH/g et un composé photochromique (B).

2. Composition durcissable photochromique selon la revendication 1, dans laquelle le monomère de silsesquioxane (A1) possède un poids moléculaire moyen en poids de 1500 à 20 000.

3. Composition durcissable photochromique selon la revendication 1, dans laquelle un groupe polymérisable par voie radicalaire du monomère de silsesquioxane (A1) est un groupe acrylique ou un groupe méthacrylique.

4. Composition durcissable photochromique selon la revendication 1, dans laquelle le composé photochromique (B) a un squelette d'indéno[2,1-f]naphto [1,2-b]pyrane.

5. Composition durcissable photochromique selon la revendication 1 qui comprend en outre un monomère polyfonctionnel polymérisable par voie radicalaire (A2) représenté par la formule (1). 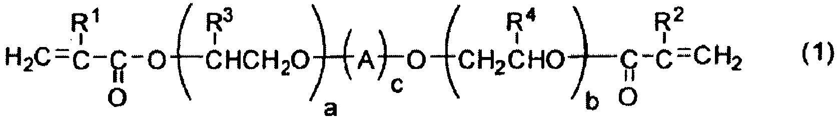 dans laquelle la valeur moyenne de (a+b) est de 2 à 30, « a » est un nombre allant de 0 à 30 et « b » est un nombre allant de 0 à 30, R¹, R², R³ et R⁴ sont chacun un atome d'hydrogène ou un groupe méthyle, et A est un groupe organique divalent ayant 1 à 20 atomes de carbone sélectionné parmi les groupes suivants : un groupe alkylène, un groupe phénylène non substitué, un groupe phénylène ayant un atome d'halogène ou un groupe alkyle ayant 1 à 4 atomes de carbone en tant que substituant, et un groupe divalent représenté par les formules (2a), (2b) ou (2c) suivantes : 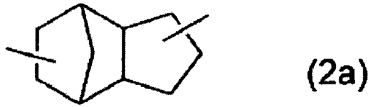 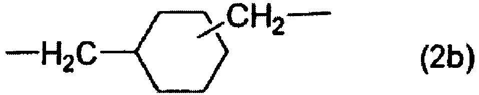 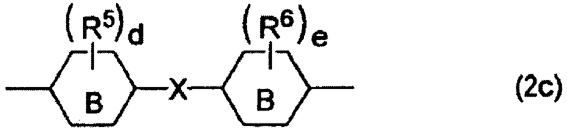 dans laquelle R⁵ et R⁶ sont chacun un groupe alkyle ayant 1 à 4 atomes de carbone ou un atome d'halogène, « d » et « e » sont chacun un nombre entier allant de 0 à 4, le cycle B à six chaînons est un cycle benzène ou un cycle cyclohexane, à condition que quand le cycle B à six chaînons est un cycle benzène, X soit un groupe divalent représenté par -O-, -S-, -S(O)₂-, -C(O)-, -CH₂-, -CH=CH-, -C(CH₃)₂- ou -C(CH₃) (C₆H₅)-, et quand le cycle B à six chaînons est un cycle cyclohexane, X soit un groupe divalent représenté par -O-, -S-, -CH₂- ou -C(CH₃)₂-, et « c » est 0 ou 1.

6. Composition durcissable photochromique selon la revendication 1 qui comprend en outre un monomère d'isocyanate (A3) représenté par la formule (2) suivante. 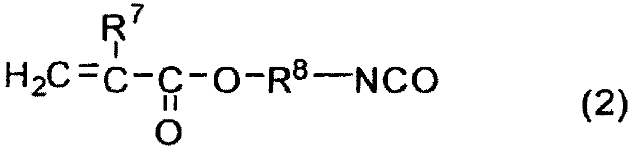 dans laquelle R⁷ est un atome d'hydrogène ou un groupe méthyle, et R⁸ est un groupe alkylène.

7. Stratifié photochromique comprenant un produit durci photochromique ayant une épaisseur de 150 à 1500 µm qui est obtenu par le durcissement de la composition durcissable photochromique selon la revendication 1 et intégré à un substrat de lentille en plastique.

8. Stratifié photochromique selon la revendication 7 qui possède une couche adhésive ayant une épaisseur de 0,1 à 100 µm entre le substrat de lentille en plastique et le produit durci photochromique.

9. Monomère de silsesquioxane (A1) ayant un groupe polymérisable par voie radicalaire et présentant un indice d'acidité de 0,5 à 2,0 mg de KOH/g.
